# EUROPEAN PATENT APPLICATION

(11) **EP 0 698 581 A2**
(43) Date of publication of application: **28.02.1996**
(21) Application number: 95113379.2
(22) Date of filing: 25.08.1995
(51) Int. Cl.: C03B 37/014

(54) **Method and apparatus for producing preform for optical fibers**

(30) Priority: 26.08.1994 JP 202125/94
(71) Applicant: SUMITOMO ELECTRIC INDUSTRIES, LTD., Osaka-shi, Osaka 541 (JP)
(72) Inventor: Takahashi, Yuji, c/o Yokohama Works, Yokohama-shi, Kanagawa 244 (JP); Watanabe, Morio, c/o Yokohama Works, Yokohama-shi, Kanagawa 244 (JP)
(74) Representative: Füchsle, Klaus, Dipl.-Ing.

(57) **Abstract**

An apparatus for producing a preform is described comprising a chamber (1) in which the soot preform (3) is placed and a burner (2) which has a plurality of sections partitioned by a plurality of pipes differing in diameter. It additionally has a flow rate controller (8) which controls the flow rate of an inert gas fed to the central section of the burner (2), a pyrometer (6) which detects the light emitted from the chamber (1) to the outside to measure the temperature of the soot preform (3), and a computer (7) which is connected to the pyrometer (6) and controls the flow rate controller (8) based on the temperature of the soot preform (3).

## Description

### BACKGROUND OF THE INVENTION

### Field of the Invention

The present invention relates to a method for producing a preform for optical fibers using flame hydrolysis deposition (FHD) process, and more particularly, to a method for producing a soot preform using vapor phase axial deposition (VAD) process.

### Related Background Art

Optical fibers are used for waveguides of optical communication systems. Optical fibers are produced by drawing a consolidated silica-based preform for optical fibers. This consolidated preform for optical fibers is obtained by sintering a soot preform to consolidate it. The VAD process is known as a method for producing the soot preform.

The methods for producing the soot preforms are disclosed in Japanese Patent Kokai (Laid-Open) Nos.61-26527 and 4-34243.

### SUMMARY OF THE INVENTION

Optical fibers can function as optical waveguides because the core and the cladding thereof differ in refractive index. The transmission characteristics of optical fibers depend greatly upon the distribution of refractive index of the optical fibers. Therefore, it is desired that refractive index of the finally obtained optical fibers be accurately controlled. The soot preform comprises a silica-based porous glass. The porous glass contains refractive index adjusting elements such as Ge and B to control the refractive index of the final optical fibers.

The refractive index of optical fibers is influenced by the distribution of the refractive index adjusting elements in the soot preform. Therefore, in order to stably produce optical fibers having qualities higher than a certain level, it is desired to be able to easily and accurately control the distribution of the refractive index adjusting elements at the stage of producing the soot preform.

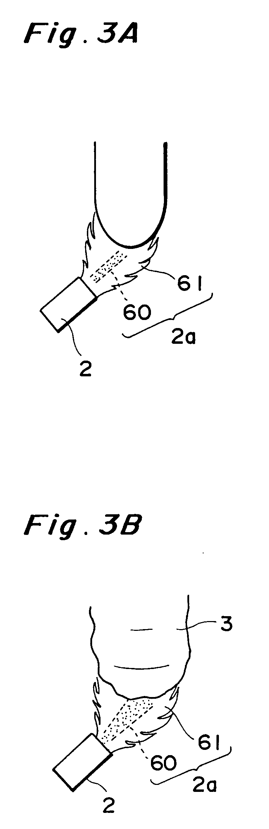

It has been considered that the distribution of the refractive index adjusting elements can be adjusted by changing the feed rate of glass forming material gases. However, in the case of changing the feed rate and in the case of changing the position of burner and the flow rate of hydrogen gas, oxygen gas and inert gas used for inhibition of heating of the burner, the form of the glass forming material gas flow 60 or flame 61 greatly changes to cause distortion or cracking of porous glass body 3 as shown in Fig. 3B.

This method can be further improved by changing the flow rate of inert gas (Ar) with keeping the flow rate of the glass forming material gas (SiCl₄) at constant. Especially, when these glass forming material gas and inert gas are allowed to flow together through a central section of a burner having a plurality of sections, refractive index in the soot preform is easily and accurately controlled, and the soot preform is not distorted at this production step. In this method, flow rate ratio (FRR) of Ar to SiCl₄ (Ar/SiCl₄) may be 2 or more, preferably 3.5 or more.

Distribution of the refractive index adjusting element in the soot preform depends upon the surface temperature of the soot preform during preparation thereof. The surface temperature depends upon the flow rate of Ar gas. Accordingly, the distribution of the refractive index adjusting element can be controlled by adjusting the flow rate of Ar gas. Furthermore, in this case, since the flow rate of SiCl₄ gas is constant, distortion or cracking of the soot preform can be avoided. The flow rate ratio FRR (Ar/SiCl₄) is desirably 3.5 or more, but when the flow rate of the inert gas increases, the temperature of the soot preform lowers too much, and deposition efficiency of glass fine particles decreases, and therefore, in order to produce practical optical fibers, the FRR (Ar/SiCl₄) is desirably 10 or less.

Furthermore, the apparatus for realizing such method is provided with a chamber in which a soot preform is placed, a burner having a plurality of sections partitioned by a plurality of pipes differing in diameter, a flow rate controller which controls the flow rate of inert gas fed to the central section, a thermometer which detects light emitted from the chamber to the outside thereof and measures the temperature of the soot preform, and a means which is connected to the thermometer and controls the flow rate controller on the basis of the temperature of the soot preform. Such means is made of an electronic circuit or a computer.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### BRIEF DESCRIPTION OF THE DRAWINGS

Fig. 1 shows an apparatus for producing a soot preform. Fig. 2 is a sectional view of the burner taken on the line Z-Z of Fig. 1.

Fig. 3A explains the production method in the first Example.

Fig. 3B explains a method for production of a soot preform with changing the flow rate of the glass forming material gas.

Figs. 4A-4D are diagrams which show the apparatus used in the first Example.

Fig. 5 explains the apparatus according to the second Example.

Figs. 6A, 6B and 6C are sectional views of a burner and explain the apparatus of Fig. 5 in detail.

Fig. 7 is a graph which shows the distribution of refractive index in the optical fibers produced by the method of the second Example.

Fig. 8 is a graph which shows the relation of difference (%) (dotted line) in refractive index of optical fibers produced by the method of the second Example, the maximum surface temperature (°C) (solid line) of the soot preform and the flow rate ratio of Ar/SiCl₄.

### DESCRIPTION OF THE PREFERRED EMBODIMENTS

First, outline of the following embodiments will be explained.

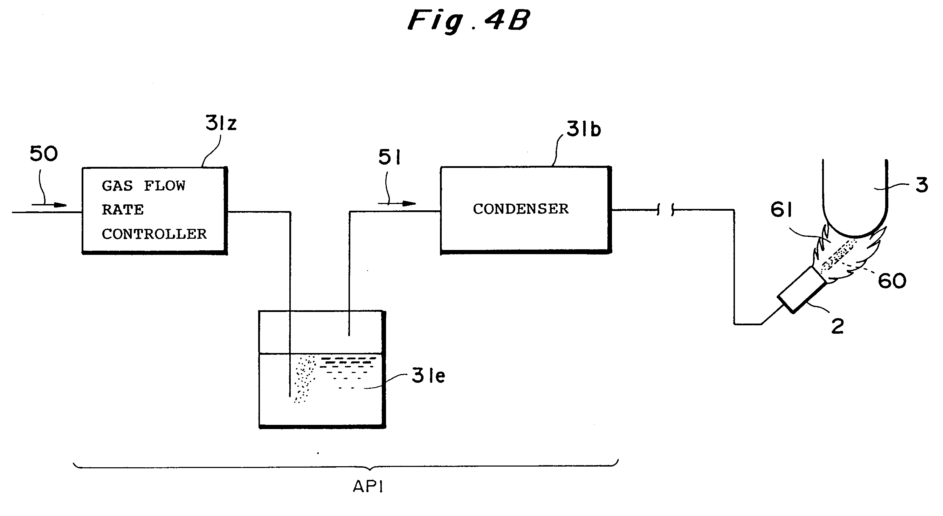

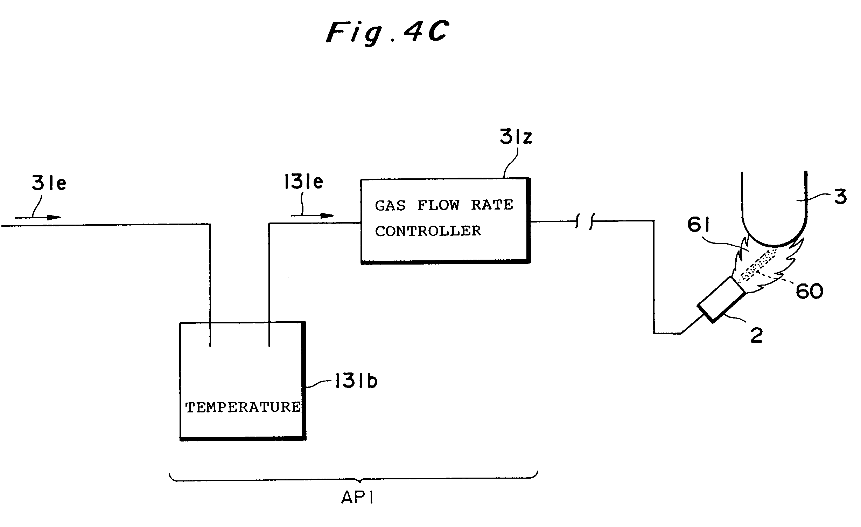

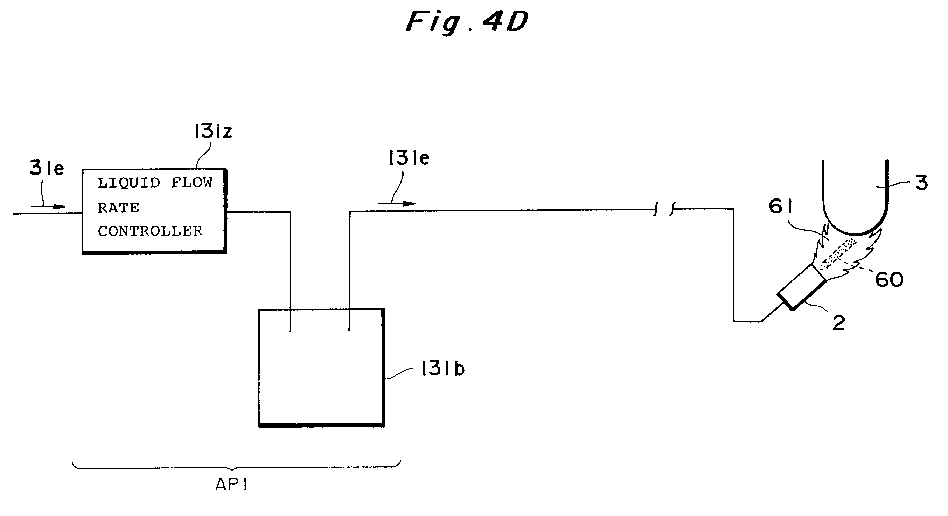

Roughly classified two kinds of glass forming material feeding apparatuses AP1 are used in production of optical fiber preform by jetting a glass forming material gas from a burner, flame-hydrolyzing the glass forming material in the flame of the burner to produce glass fine particles and depositing the glass fine particles on a rotating starting member to grow the fine particles to form a porous glass body. One is called a bubbling system according to which an inert gas 50 is bubbled in glass forming material solution 31e to prepare a mixed gas 51 of the vaporized glass forming material gas and the inert gas, which is fed to burner 2 as shown in Fig. 4B. Wherein the inert gas 50 is introduced into the bubbler 31e through a gas flow rate controller 31z which controls the amount of gas passing therethrough. In this system, usually the concentration of the glass forming material solution is controlled by controlling the flow rate of the inert gas 50 and by passing the mixed gas of the vaporized glass forming material gas and the inert gas through condenser 31b to condense the glass forming material gas. Another is called a direct feeding system according to which glass forming material solution 31e is directly evaporated by evaporator 131b and only the vaporized glass forming material 131e is fed to burner 2 as shown in Figs. 4C and 4D. The system shown in Fig. 4D has a liquid flow rate controller 131z which controls the amount of liquid passing therethrough. This system can be further roughly classified into two. According to one of the two, the flow rate of the glass forming material gas 131e obtained by the vaporization is controlled as shown in Fig. 4C. Another is called a liquid feeding system according to which the flow rate of the glass forming material solution 31e before vaporized is controlled and this is vaporized by evaporator 131b to obtain glass forming material gas 131e as shown in Fig. 4D.

Furthermore, since improvement in deposition efficiency of glass fine particles has recently been desired in view of a demand for rapid synthesis, the former bubbling system is shifting to the technique of reducing the mixing ratio of the inert gas to inhibit the decrease of deposition efficiency caused by cooling, namely, a technique close to the direct feeding system.

The inventors have considered to easily adjust the distribution of refractive index in production of preform for optical fibers. Here, the distribution of refractive index determines depending on the distribution of concentration of the element for adjusting the distribution of refractive index on the surface of porous glass body growing by deposition of glass fine particles. This concentration is greatly influenced by the surface temperature of the growing surface of porous glass body. Thus, it is important for realization of easy adjustment of the distribution of refractive index to control the surface temperature of the porous glass body.

Through many years, the inventors have attempted to control the distribution of surface temperature by altering positional relation between the porous glass body and the burner, and the flow rates of glass forming material gas, hydrogen gas, oxygen gas, inert gas used for inhibition of heating of burner, etc.

However, if such alterations are merely carried out, form of the glass forming material flow 60 and flame 61 greatly changes as shown in Fig. 3B, and since this is apt to cause cracking and distortion of porous glass body 3 and the scope in which the conditions can be substantially altered is narrow, the desired distribution of the soot surface temperature cannot be easily obtained.

As a means for solving the above problems, the present invention provides a method for producing a preform for optical fibers which comprises jetting a glass forming material gas from a burner, flame hydrolyzing the glass forming material to produce glass fine particles, depositing the glass fine particles on a rotating starting member and growing the particles to make a porous glass body, wherein the glass forming material gas is fed to the burner as a mixed gas of the glass forming material gas and an inert gas at a mixing ratio of flow rate of inert gas/flow rate of glass forming material ≧ 2.0.

In an especially preferred embodiment, the mixed gas 51 of the glass forming material gas and the inert gas is allowed to flow through the first layer 21s of multiple pipe burner 2.

Furthermore, in an especially preferred embodiment in the line of feeding the mixed gas 51 of the glass forming material gas and the inert gas to the burner, (i) the mixed gas is formed by joining the inert gas with the glass forming material gas between the glass forming material gas feeding device and the burner, (ii) the mixed gas is fed by bubbling the inert gas in the glass forming material solution, (iii) the glass forming material solution is directly vaporized and the resulting glass forming material gas is fed with controlling the flow rate, or (iv) the glass forming material solution is directly vaporized while being fed with controlling the flow rate to obtain the glass forming material gas.

It is especially preferred to use Ar gas or N₂ gas as the inert gas.

When the glass forming material and the inert gas are fed as a mixed gas to the burner in this way, the surface temperature of the porous glass body cannot be greatly changed under the condition where amount of the inert gas is very small. However, when the proportion of the inert gas in the mixed gas increases and exceeds a certain level, the surface temperature is abruptly greatly influenced. According to the investigation by the inventors, the surface temperature can be changed to the practically effective extent by adjusting the flow rate of inert gas at the ratio of flow rate of inert gas/flow rate of glass forming material gas ≧ 2.0. However, when the flow rate of the inert gas increases, deposition efficiency of glass fine particles decreases due to cooling effect, and synthesis of practically effective porous glass body becomes impossible. Therefore, a substantial upper limit of the ratio is flow rate of inert gas/flow rate of glass forming material gas ≦ 10.0.

Furthermore, since the above is not the alteration of glass forming material gas, hydrogen gas, oxygen gas, and inert gas for inhibition of heating of burner, cracking and distortion of porous glass body 3 occur with difficulty due to the inconspicuous change in the form of glass forming material flow 60 and flame 61 as shown in Fig. 3B. That is, this means is an ideal means for greatly changing the surface temperature of the porous glass body with diminishing occurrence of cracking and distortion of porous glass body.

In the case of the mixing ratio of flow rate of inert gas/flow rate of glass forming material gas ≧ 2.0, an effective change of the surface temperature can be realized without employing the means for formation of mixed gas 51, but, for example, the following two methods can be referred to as a means to produce a mixed gas. One is a method of realizing the above mixing ratio by bubbling inert gas 50 in glass forming material solution 31e in a line of feeding the glass forming material gas to the burner to form a device for preparing mixed gas 51 of the glass forming material gas and the inert gas (bubbling method) and passing the resulting mixed gas 51 through condenser 31b to condense the glass forming material gas as shown in Fig. 4B.

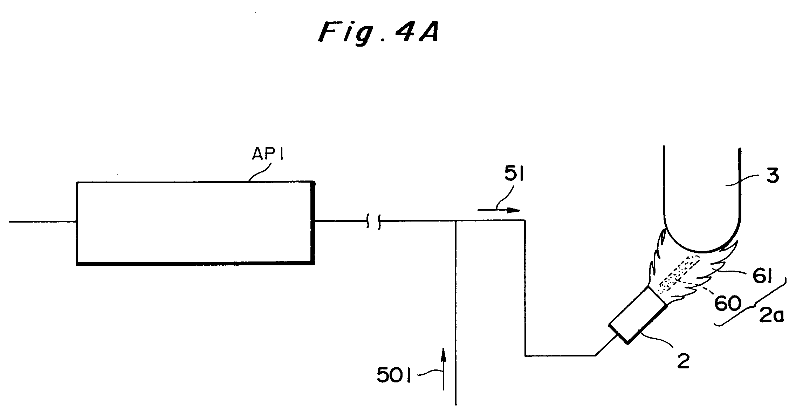

Another is a method of realizing the mixing ratio by joining the inert gas 501 such as Ar between glass forming material gas feeding device AP1 and burner 2 as shown in Fig. 4A and adjusting the flow rate of the inert gas. The glass forming material gas feeding device in this case may be of the bubbling system as shown in Fig. 4B and explained hereabove or of the system (direct feeding system) in which glass forming material solution 31e is directly evaporated without using the inert gas and the resulting glass forming material gas 131e is fed to burner 2 as shown in Figs. 4C and 4D.

The inert gas usable in the mixed gas includes, for example, Ar gas, He gas and N₂ gas, and especially preferred are Ar gas and N₂ gas in view of their small thermal conductivity and large cooling effect. Any of these gases can realize the similar change in the surface temperature as far as the flow rate of inert gas/flow rate of glass forming material gas ≧ 2.0 is satisfied.

Furthermore, when the burner is of a concentric multiple pipe type, it has been found that the surface temperature of the porous glass body can be most effectively changed by flowing the mixed gas of glass forming material gas and inert gas through the first layer. For example, in the case of a columnar octuple pipe burner, the mixed gas is flowed through the first layer 21s (central port).

Apparatus and process according to the first embodiment will be explained in more detail.

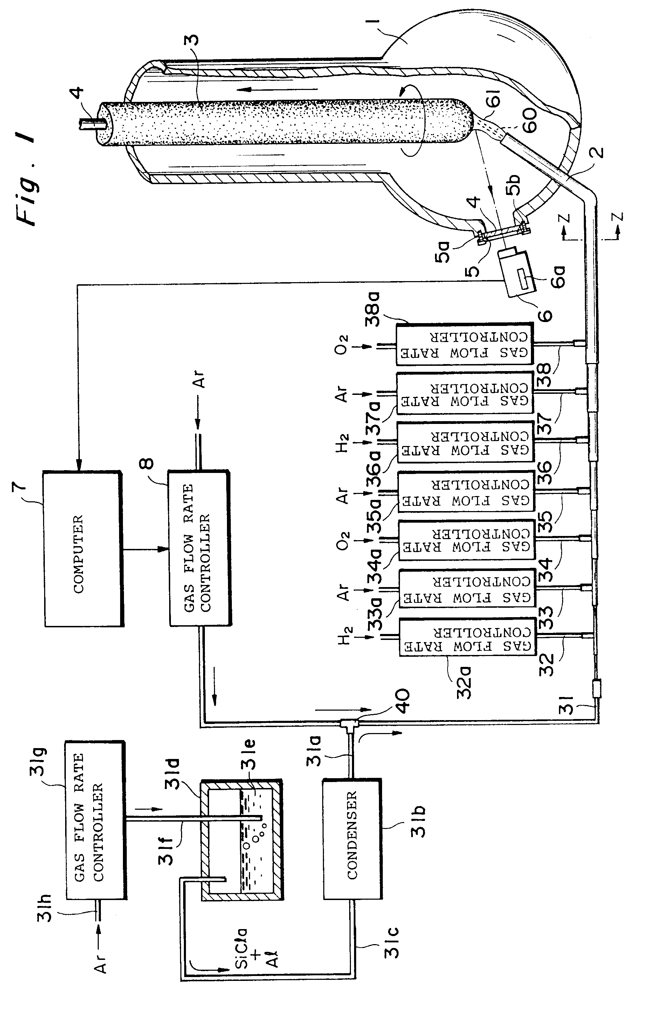

Fig. 1 is an apparatus for producing the soot preform according to the first embodiment. This apparatus has chamber 1 and burner 2 which pierces through the chamber 1. From the burner 2 are discharged gases comprising H₂ gas, O₂ gas, Ar gas, GeCl₄ gas and SiCl₄ gas. The gases except for the Ar gas react as soon as they are discharged and form the flow 2a containing glass forming material gas 60 and flame 61. This reaction produces glass fine particles (soot), which are deposited on soot preform 3 which has already been partially formed. The burner 2 is made of quartz glass.

The soot preform 3 is supported by seed rod 4. While the flow 2a is discharged from burner 2, the seed rod 4 is rotated around its axis. While the flow 2a is discharged from burner 2, the seed rod 4 is gradually moved upward. Therefore, while the glass fine particles are deposited on the lower end of the soot preform, the soot preform 3 is gradually moved upward with being rotated.

There is provided a window at the outer wall of chamber 1. This window is formed by covering with glass plate 4 an opening formed at the outer wall of the chamber. The glass plate 4 is provided between ring 5 and chamber 1 and fixed to chamber 1 by bolts 5a, 5b which pierce them. The glass plate 4 is transparent.

Outside the chamber 4, optical pyrometer 6 is provided. This pyrometer 6 detects a light emitted from the surface of soot preform 3 through glass plate 4, thereby to detect the temperature of the surface of soot preform 3, more specifically, the temperature of the surface of soot preform 3 on which flame 2a strikes. In usual optical pyrometer 6, there is provided a liquid crystal display 6a, and the temperature measured is displayed on this display 6a.

From the pyrometer 6, an electric signal having temperature information is output. For example, when "1000°C" is displayed on the display 6a of pyrometer 6, since "1000" in the decimal system is "1111101000" in the binary system, the binary data "1111101000" is output from the pyrometer 6. In this case, 1 is high level voltage signal H and 0 is low level voltage signal L.

The electric signal (binary data) output from pyrometer 6 is input in a usual computer 7. This computer 7 is NEC9801 series manufactured by Nippon Electric Co., Ltd.

Flow rate controller 8 is electrically connected to the computer 7, and the computer 7 controls the flow rate controller 8 based on the electric signal from the pyrometer 6. The flow rate controller 8 controls the flow rate of gas flowing therethrough. That is, when the surface temperature of soot preform 3 measured by the pyrometer 6 is higher than the standard value, computer 7 controls the flow rate controller 8 so that flow rate of Ar gas flowing through the flow rate controller 8 increases. Furthermore, when the surface temperature of soot preform 3 measured by the pyrometer 6 is lower than the standard value, computer 7 controls the flow rate controller 8 so that flow rate of Ar gas flowing through the flow rate controller 8 decreases.

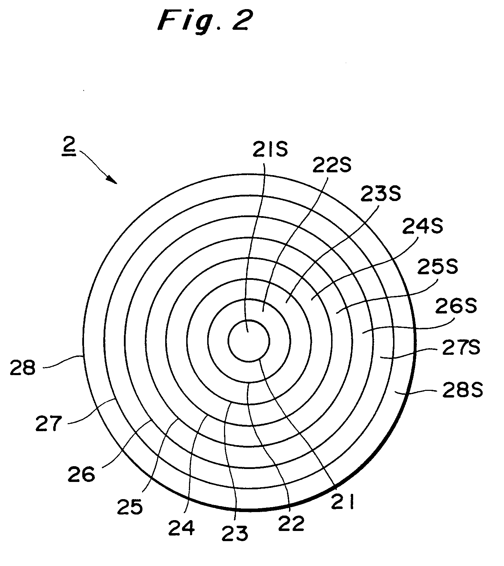

Next, the conduit connected to the burner will be explained. Fig. 2 is a sectional view of burner 2 taken along the line Z-Z in Fig. 1. This burner 2 has a plurality of pipes differing in diameter. The burner 2 has a plurality of sections partitioned by cylindrical pipes 21-28. The burner 2 shown in Fig. 2 has eight cylindrical pipes and eight sections (spaces, gas passages) 21s-28s partitioned by the pipes.

Conduit 31 communicates with section 21s. Conduit 31 communicates with conduit 31a and conduit 31p through branching device 40. Conduit 31a is connected to thermostatic container 31b. The thermostatic container 31b is a device which keeps the temperature of gas in container 31b at constant, and concentration of the gas introduced into thermostatic container 31b is controlled by passing the gas therethrough. The container 31b is connected to bubbler 31d through conduit 31c. Solution 31e of SiCl₄ is contained in the bubbler 31d. Conduit 31f is connected to the bubbler 31d, and Ar gas is introduced into solution 31e in the bubbler 31d through the conduit 31f. Amount of Ar gas introduced into the bubbler 31d is controlled by flow rate controller 31g connected to the conduit 31f. Ar gas is introduced into the flow rate controller 31g through conduit 31h.

The conduit 31p is connected to gas flow rate controller 8 controlled by computer 7. The flow rate of Ar gas flowing through conduit 31p changes depending on the temperature of soot preform 3 measured by pyrometer 6, but the flow rate of the gas (SiCl₄ + Ar gas) flowing through conduit 31c is constant.

Conduit 32 communicates with section 22s, conduit 33 communicates with section 23s, conduit 34 communicates with section 24s, conduit 35 communicates with section 25s, conduit 36 communicates with section 26s, conduit 37 communicates with section 27s, and conduit 38 communicates with section 28s.

Gas flow rate controllers 32a-38a are connected to conduits 32-38, respectively.

In forming a soot preform 3, raw material SiCl₄ and Ar gas is introduced into the first section 21s of the burner, and H₂ is introduced into flow rate controller 32a which communicates with the second section 22s of the burner 2. Ar is introduced into flow rate controller 33a. O₂ is introduced into flow rate controller 34a. Ar is introduced into flow rate controller 35a. H₂ is introduced into flow rate controller 36a. Ar is introduced into flow rate controller 37a. O₂ is introduced into flow rate controller 38a. The flow rate of gases other than the gas introduced into the innermost section 21s is constant.

### (Experimental Examples 1-1 to 1-4)

Soot preform 3 was prepared using the apparatus shown in Fig. 1. Porous glass body 3 was synthesized by flowing a gas through columnar octuple pipe burner 2 shown in Fig. 2. The bubbling system as shown in Fig. 4B was used as glass forming material gas feeding device AP1. In the apparatus of Fig. 1, Ar gas was joined between the glass forming material gas feeding device AP1 and the burner as in the apparatus of Fig. 4. Conditions in the example 1-1 to 1-4 were shown in TABLE 1-1 to 1-4 respectively.

Synthesis was carried out four times differing in the mixing ratio of Ar/SiCl₄ by flowing a mixed gas of SiCl₄ gas and Ar gas through the 1st layer or section (central port) with changing the flow rate of Ar gas as shown in TABLE 2. The mixing ratios in Experimental Examples 1-1 to 1-4 were 0.3, 1.6, 2.4 and 4.3, respectively.

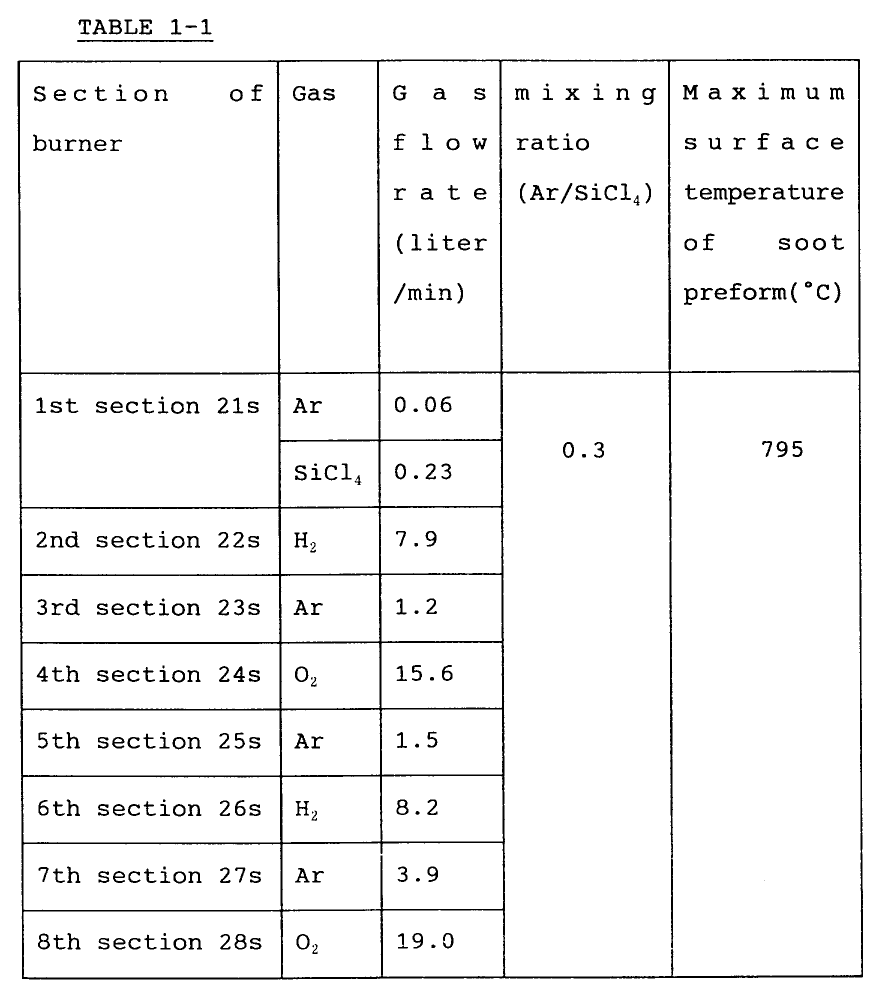

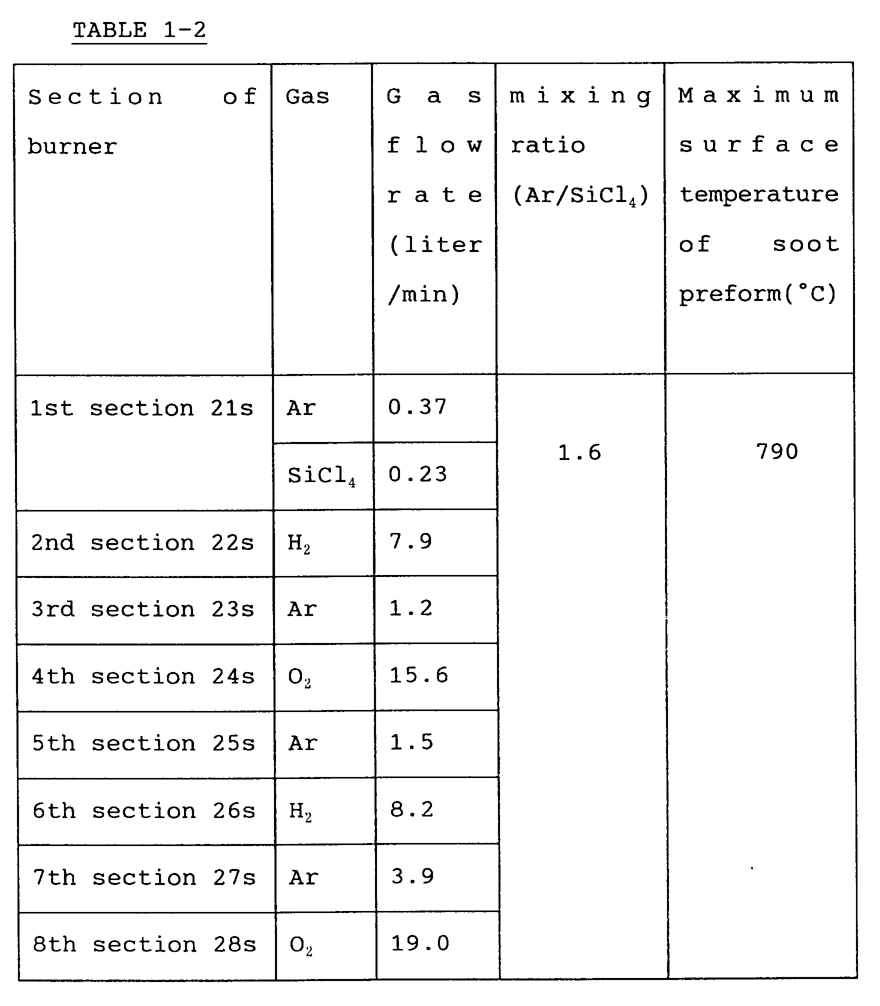

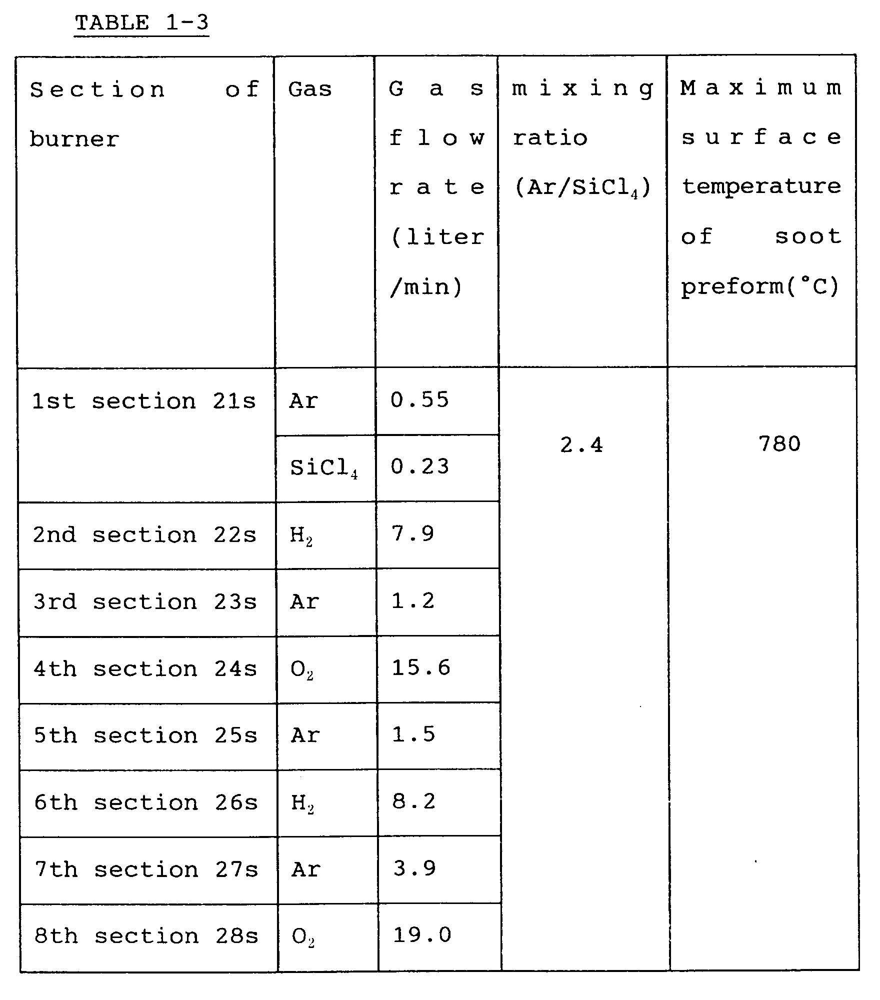

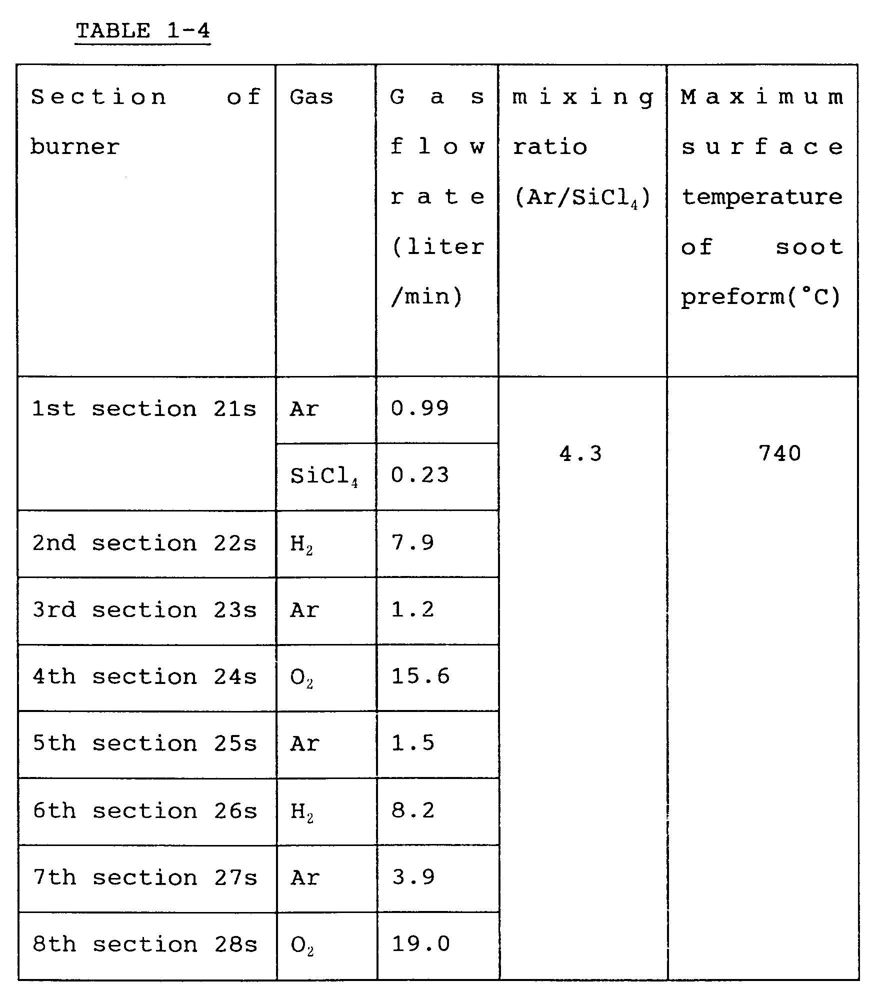

According to the experiments 1-1 to 1-4, no cracking and distortion occurred in all of the syntheses of porous glass bodies, and good porous glass bodies 3 were obtained. In each synthesis, the surface temperature of porous glass body 3 was measured by infrared pyrometer 6. As a result, difference in maximum surface temperature in Experimental Examples 1-1 to 1-3 was 15°C while a very great temperature difference of 40°C in maximum surface temperature was obtained between Experimental Example 1-3 (mixing ratio 2.4) and Experimental Example 1-4 (mixing ratio 4.3). That is, the surface temperature was able to be greatly changed without causing cracking or distortion by changing the mixing ratio in the range of mixing ratio≧ 2.0.

Furthermore, it has been confirmed that even when the flow rate ratio is changed during deposition, flame or flow of glass forming material does not change greatly and cracking or distortion does not occur, and good porous glass bodies can be obtained.

Next, an apparatus and process for producing a soot preform according to the second embodiment will be explained.

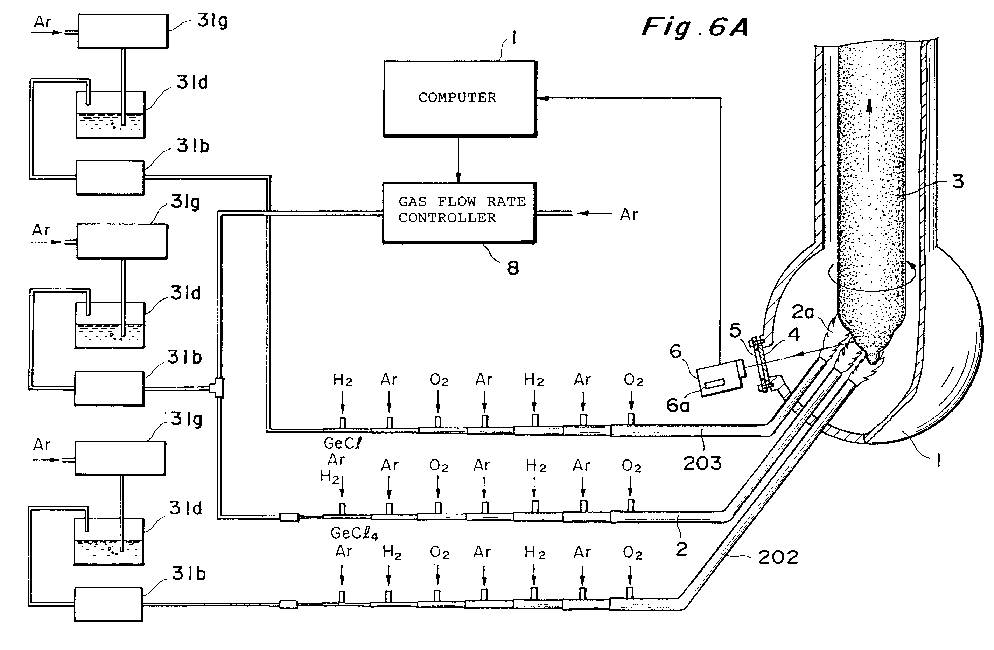

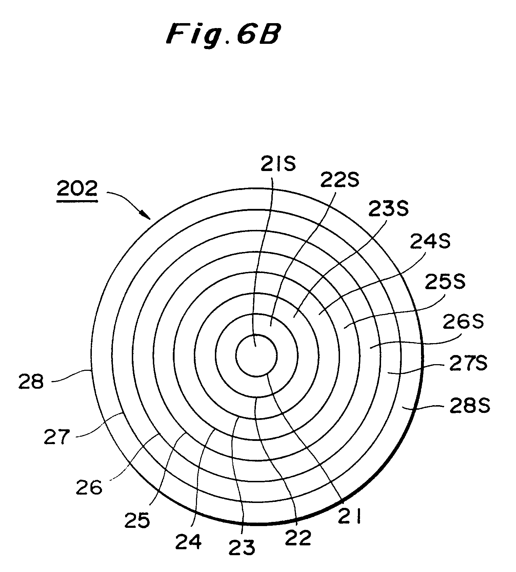

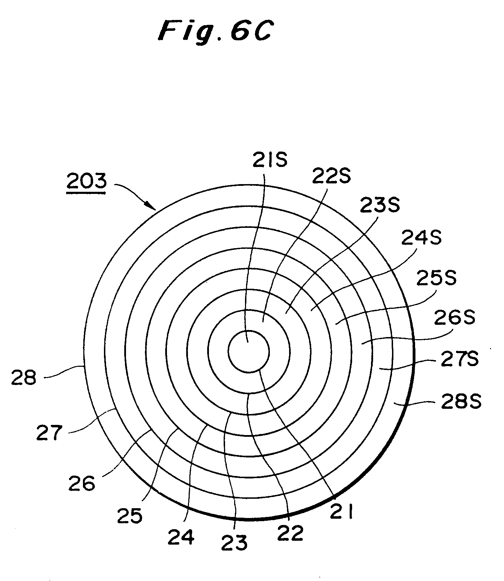

Fig. 6A shows an apparatus for producing the soot preform according to the second embodiment. This apparatus is provided with chamber 1 and burners 2, 202 and 203 piercing through the chamber 1. The structure of the burners 202 and 203 is the same as that of the burner 2, and sections of these burners are shown in Figs. 6B and 6C. Furthermore, construction of the system connected to the burner 2 is the same as that shown in Fig. 1. In this apparatus, a device controlling the flow rate of Ar based on the temperature of soot preform 3 was not connected to the first burner 202 and the third burner 203. In Fig. 6A, devices of the same reference number have the same structure.

### (Experimental examples 2-1 to 2-2)

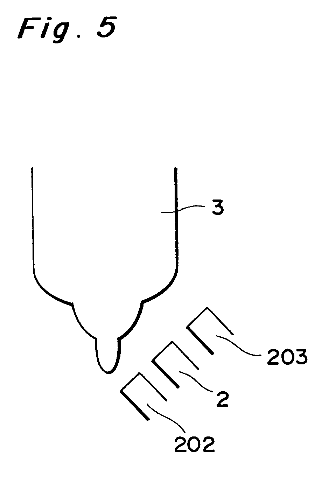

An optical fiber soot preform was fabricated by using the apparatus shown is Fig. 6A or Fig. 5.

Three columnar octuple pipe burners 2, 202, 203 having the same structure as shown in Fig. 2 were positioned near soot preform 3 to synthesize porous glass body 3, as shown in Fig. 6A. These burners were the first burner 202, the second burner 2 and the third burner 203 in this order from the pulling-up axis, and GeCl₄ gas as a glass forming material gas for adjusting distribution of refractive index was also flowed through the 2nd sections of the first burner 202 and the second burner 2.

The GeCl₄ gas was not flowed through the third burner 203. The glass forming material gas feeding devices of the burners were all bubbling systems. Only in the case of the second burner, argon gas was joined between the glass forming material gas feeding device and the burner and a mixed gas of SiCl₄ and argon gas was flowed through the 1st layer as shown in Fig. 4A.

Syntheses differing in Ar/SiCl₄ mixing ratio were carried out twice by changing the flow rate of argon gas. The mixing ratio in Experimental Example 2-1 was 3.9 and that in Experimental Example 2-2 was 5.9. The maximum surface temperature of soot 3 was 850°C in Experimental Example 2-1 (ratio 3.9) and 810°C in Experimental Example 2-2 (ratio 5.9). The conditions of the experiments 2-1 and 2-2 are shown in TABLE 2-1 (A)-(C) and 2-2 (A)-(C), respectively.

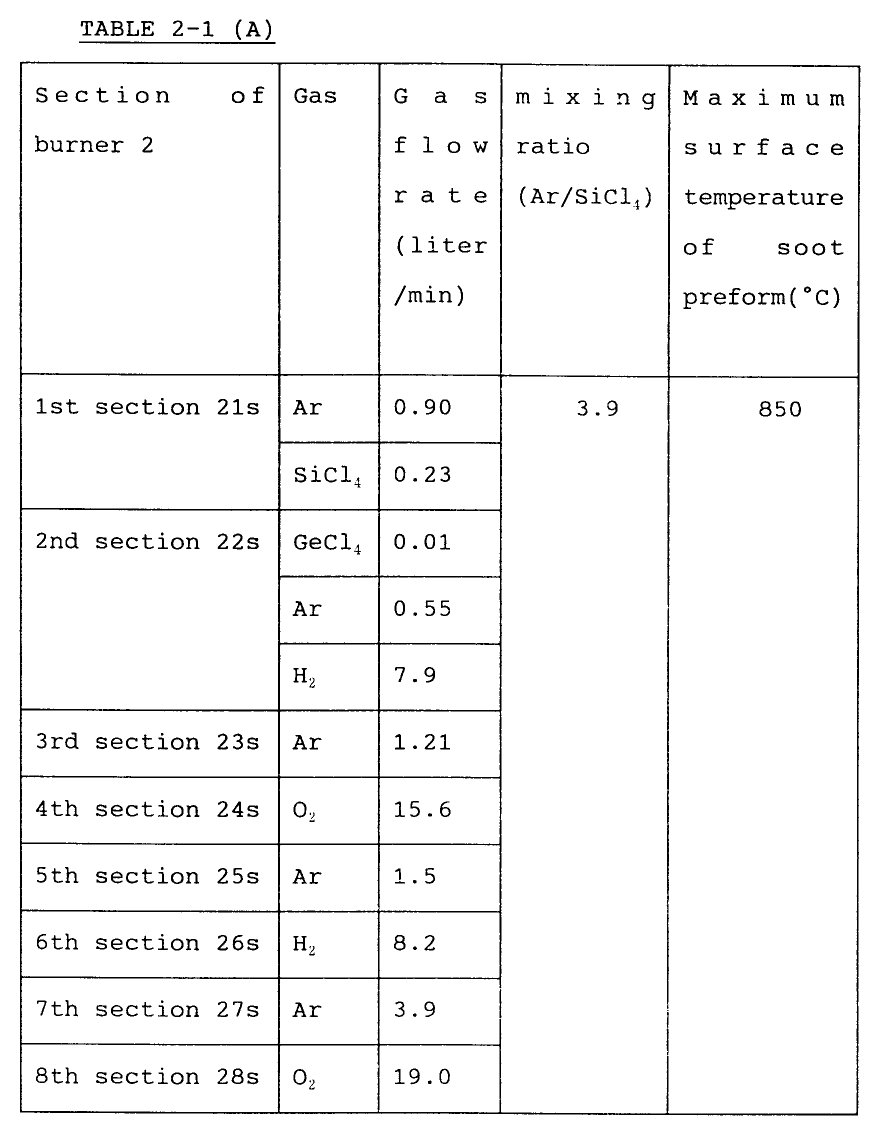

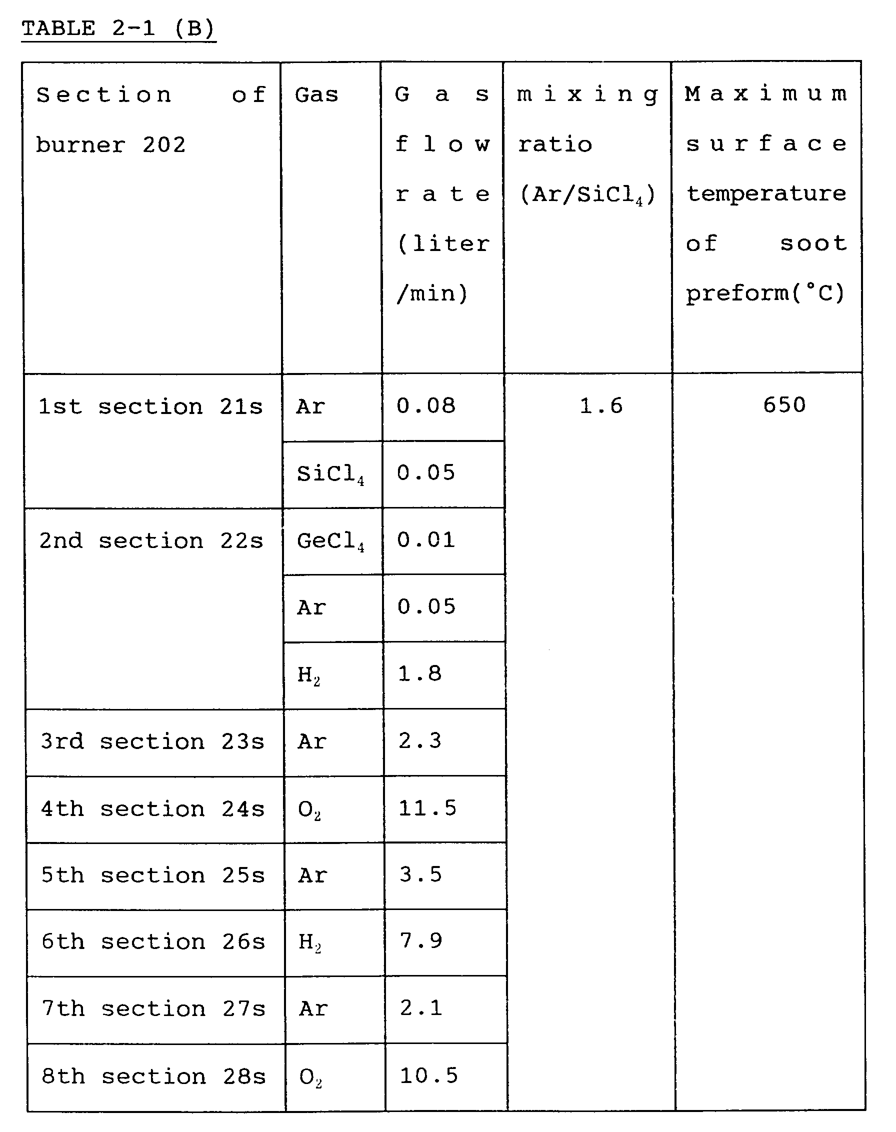

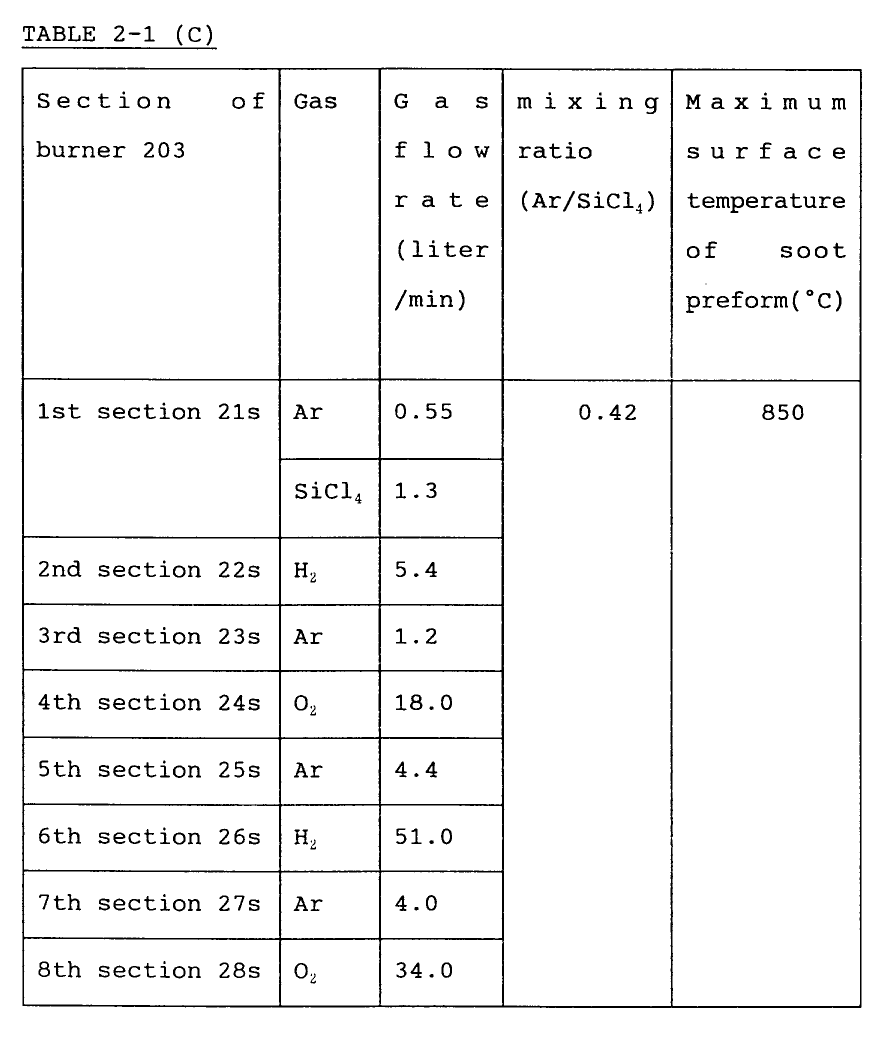

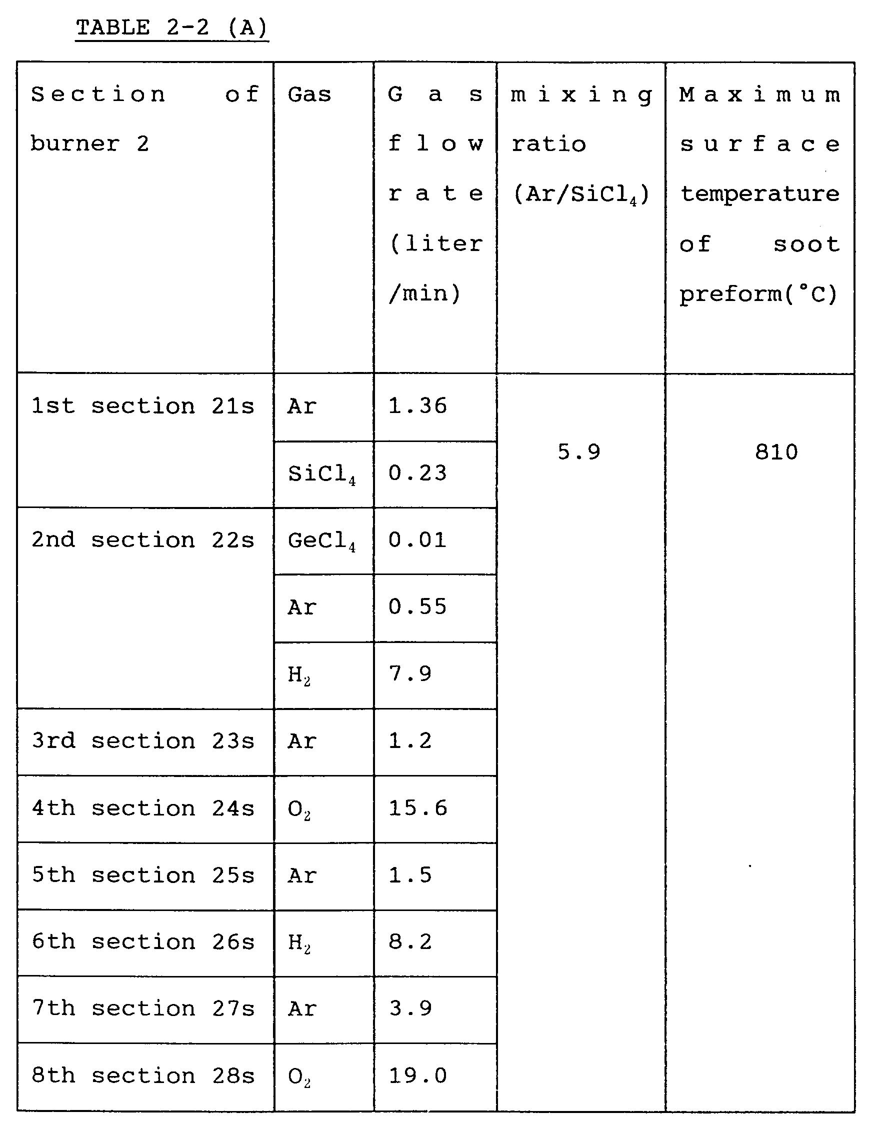

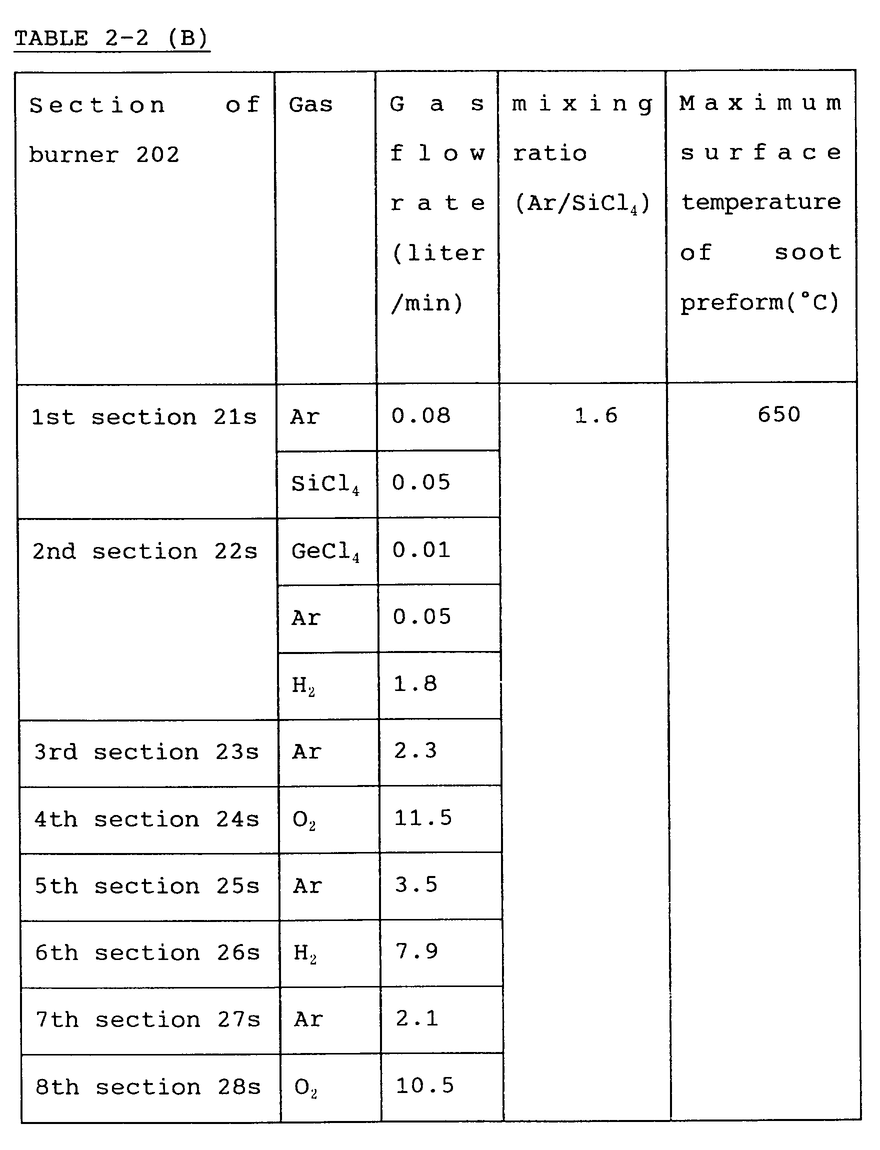

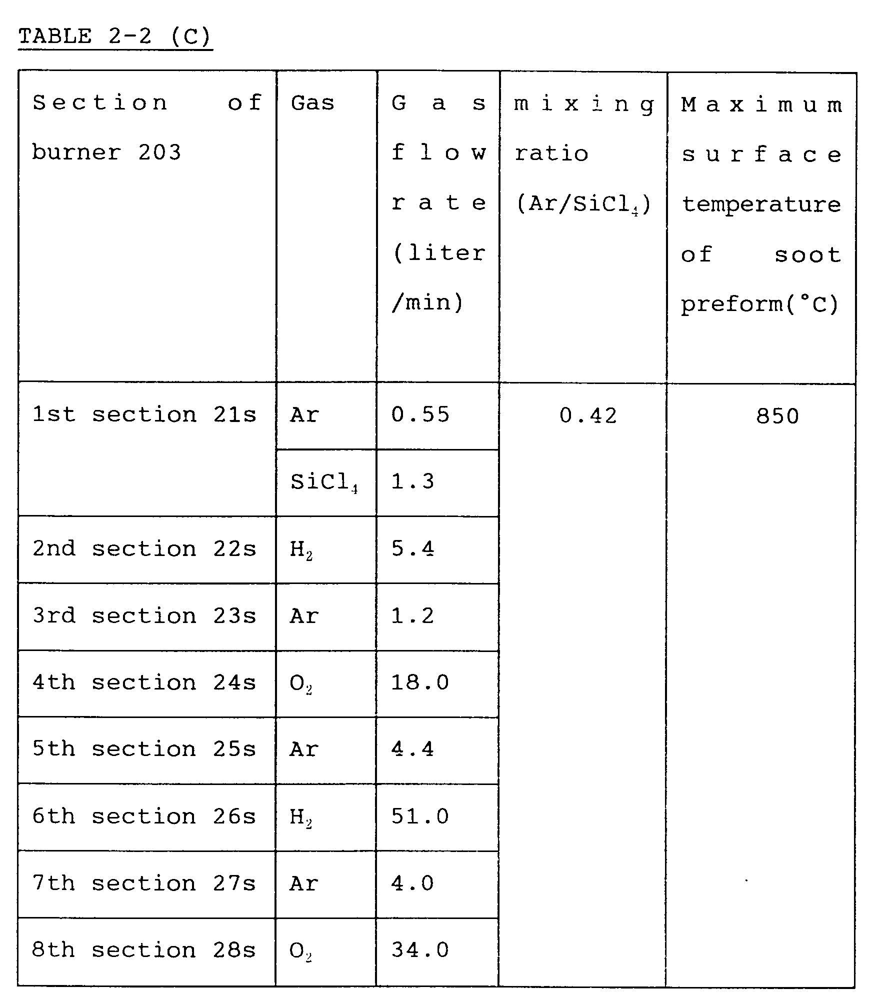

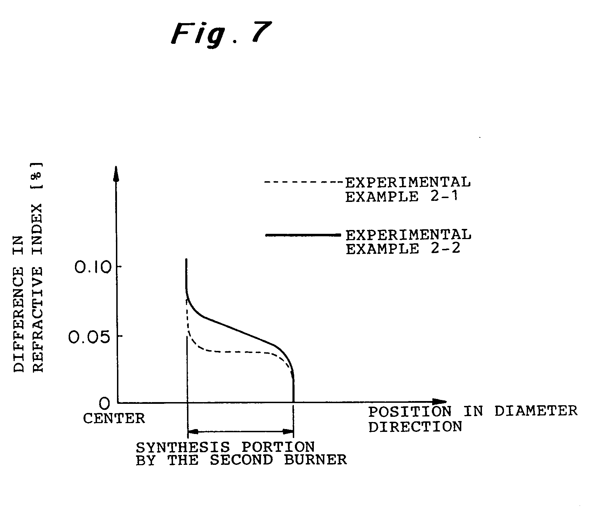

In both of the syntheses, neither cracking nor distortion occurred in the portion of porous glass bodies synthesized by the second burner 2, and good porous glass bodies 3 were obtained. The resulting two porous glass bodies were subjected to dehydration and sintering to make transparent glass bodies. Distribution of refractive index of these glass bodies was evaluated by a preform analyzer. As a result, the distribution of refractive index of the portion synthesized by the second burner could be greatly changed as shown in Fig. 7.

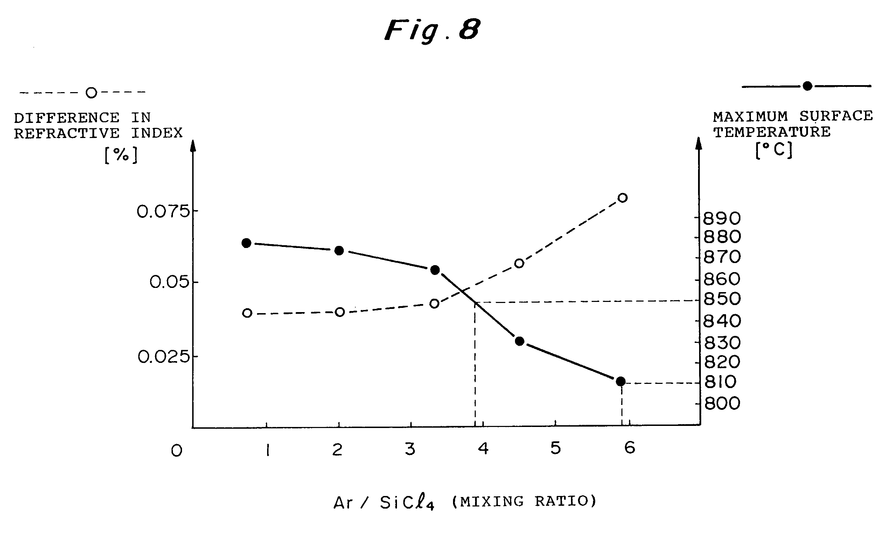

Fig. 8 shows relations between the ratio Ar/SiCl₄ and the maximum surface temperature. When the mixing ratio is 2 or more, the surface temperature could be changed. Moreover, the refractive index could also be changed by changing the mixing ratio.

Syntheses were conducted four times in the same manner as in Experimental Example 1, except that the glass forming material feeding system shown in Fig. 4C was used in place of the bubbling system and N₂ gas was used in place of Ar of the 1st layer in Experimental Example 1-1 to Experimental Example 1-4.

As a result, when the ratio of flow rate of N₂ gas/flow rate of glass forming material gas was 2 or more, the surface temperature could be greatly changed without causing cracking and distortion.

As explained above, by specifying the mixing ratio of flow rate of inert gas/flow rate of glass forming material gas within the range of the present invention, the surface temperature of the porous glass body can be greatly changed by changing the flow rate of the inert gas, and neither cracking nor distortion occurs. Therefore, when the present invention is utilized for the adjustment of distribution of refractive index by the control of the distribution of the surface temperature in the production of optical fiber preforms, this is very effective and is advantageous for increase of production efficiency.

From the invention thus described, it will be obvious that the invention may be varied in many ways. Such variations are not to be regarded as a departure from the spirit and scope of the invention, and all such modifications as would be obvious to one skilled in the art are intended for inclusion within the scope of the following claims.

The basic Japanese Application No. 202125/1994 (6-202125) filed on August 26, 1994, is hereby incorporated by reference.

## Claims

1. A process for producing a soot preform for optical fibers which comprises the steps of
(a) preparing a burner having a plurality of sections partitioned by a plurality of pipes differing in diameter and arranged concentrically,
(b) flowing SiCl₄ gas through at least one section of the burner, and
(c) flowing Ar gas through at least one section of the burner, the flow rate of the Ar gas being changed with keeping the flow rate of the SiCl₄ gas at constant.

2. A process according to claim 1, wherein the Ar gas is flowed through the central section of the burner.

3. A process according to claim 1, wherein the Ar gas and the SiCl₄ gas are flowed through the same section.

4. A process according to claim 1, wherein the flow rate of the Ar gas is two times or more the flow rate of the SiCl₄ gas.

5. A process according to claim 4, wherein the flow rate of the Ar gas is two times or more and ten times or less the flow rate of the SiCl₄ gas.

6. A process according to claim 4, wherein the flow rate of the Ar gas is 3.5 times or more the flow rate of the SiCl₄ gas.

7. A process according to claim 4, wherein the flow rate of the Ar gas is 3.5 times or more and ten times or less the flow rate of the SiCl₄ gas.

8. A process according to claim 1, wherein in the step (c), (i) surface temperature of the soot preform is measured by a pyrometer and (ii) the flow rate of the Ar gas is controlled on the basis of the temperature measured by the pyrometer.

9. A process according to claim 1, wherein a gas containing H₂ is flowed through the section between the innermost pipe and a pipe adjacent thereto.

10. A process according to claim 1, wherein a gas containing H₂, Ar and GeCl₄ is flowed through the section between the innermost pipe and a pipe adjacent thereto.

11. An apparatus for producing a soot preform for optical fibers which has
(a) a chamber in which the soot preform is placed,
(b) a burner which pierces through the chamber and has a plurality of sections partitioned by a plurality of pipes differing in diameter and arranged concentrically,
(c) a flow rate controller which controls the flow rate of an inert gas fed to the central section of the burner,
(d) a pyrometer which detects the light emitted from the chamber to the outside to measure the temperature of the soot preform, and
(e) a means which is connected to the pyrometer and controls the flow rate controller based on the temperature of the soot preform.

12. An apparatus according to claim 11, which has a conduit connecting the central section of the burner and the flow rate controller and a bomb which feeds a glass forming material gas into the conduit.

13. An apparatus according to claim 12, wherein the inert gas contains Ar and the glass forming material gas contains SiCl₄.
